# EUROPÄISCHE PATENTSCHRIFT

(11) **EP 4 072 305 B1**
(45) Veröffentlichungstag und Bekanntmachung des Hinweises auf die Patenterteilung: **04.09.2024**
(21) Anmeldenummer: 20838366.1
(22) Anmeldetag: 09.12.2020
(51) Int. Cl.: A23G 3/34, A23G 3/42

(54) **ISOMALTULOSE-HALTIGE HARTKARAMELLEN UND VERFAHREN ZU DEREN HERSTELLUNG**
HARD CARAMELS CONTAINING ISOMALTULOSE, AND METHOD FOR PRODUCING SAME
CARAMELS DURS CONTENANT DE L'ISOMALTULOSE ET PROCÉDÉS DE FABRICATION DE CEUX-CI

(30) Priorität: 11.12.2019 DE 102019219336
(43) Veröffentlichungstag der Anmeldung: 19.10.2022
(73) Patentinhaber: Südzucker AG, 68165 Mannheim (DE)
(72) Erfinder: WILLIBALD-ETTLE, Ingrid, 76829 Landau (DE); RICHFIELD, David, 67549 Worms (DE); WILLFAHRT, Jörg, 67590 Monsheim (DE); LUTZ, Christina, 5073 Gipf-Oberfrick (CH); PLACE, Raymond, 4059 Basel (CH)
(74) Vertreter: Schrell, Andreas
(86) Internationale Anmeldenummer: PCT/EP2020/085316
(87) Internationale Veröffentlichungsnummer: WO 2021/116187

(56) Entgegenhaltungen:
- WO-A1-2006/119991
- US-A1- 2002 028 276

## Beschreibung

Die vorliegende Erfindung betrifft Isomaltulose-haltige Hartkaramellen umfassend einen Kern und eine geschlossene mikrokristalline Oberflächenschicht mit einer Dicke von höchstens 1 mm sowie Verfahren zur Herstellung Isomaltulose-haltiger Hartkaramellen.

Gegenwärtig befinden sich zahlreiche verschiedene zuckerhaltige und zuckerfreie Hartkaramellen in unterschiedlichster Form auf dem Markt. Das steigende Interesse in der Bevölkerung an gesünderen Alternativen zu üblichen zuckerhaltigen Hartkaramellen bei gleichzeitiger Beibehaltung des Aussehens, der Haltbarkeit und des Mundgefühls solcher Hartkaramellen, führte in den letzten Jahren zur Entwicklung einer Vielzahl von Zuckeraustauschstoffe enthaltenden Hartkaramellen.

Isomaltulose (Palatinose^{®}) ist ein Zucker, der sich durch einen im Vergleich zu Saccharose verringerten glykämischen Index (GI), sowie eine gleichmäßige langanhaltende Bereitstellung von Energie für den Körper auszeichnet. Chemisch gesehen ist Isomaltulose ein α-1,6 glykosidisch verknüpftes Disacharid aus Glucose und Fructose: 6-O-α-D-Glucopyranosyl-D-Fructose. Isomaltulose ist ein Isomer der Saccharose, das technisch in der Regel durch enzymatische Umsetzung aus Saccharose erhalten wird und in der Natur in geringen Mengen auch in Honig und Zuckerrohr zu finden ist. Dabei liegt die Süßkraft der Isomaltulose bei etwa 50 % der Süßkraft der Saccharose. Isomaltulose zeichnet sich zudem dadurch aus, dass es akariogen (d.h. nicht Karies auslösend) ist. Der Grund hierfür ist, dass die Bakterien der Mundflora nicht dazu in der Lage sind Isomaltulose in zahnschädigende Säuren umzusetzen. Darüber hinaus vermindert Isomaltulose die Adhäsion von Plaque-bildenden Bakterien an die Zähne und verhindert dadurch die Bildung von Belegen und Zahnstein.

Die WO 2006/119991 A1 offenbart lagerstabile und sensorisch besonders attraktive Hartkaramellen mit einem Isomaltulosegehalt von mehr als 50 Gew.-%.

Die WO 2012/092255 A1 betrifft Hartkaramellen mit verringerter Menge an Zucker, umfassend Isomalt, Isomaltulose, Trehalose und/oder Erythritol als Zuckeraustauschstoffe.

Im Stand der Technik bekannte Verfahren zur Herstellung von Zuckeraustauschstoffe, insbesondere Isomaltulose, enthaltenden Hartkaramellen, umfassen eine Erhitzung der Zuckeraustauschstoffe enthaltenden Ausgangslösung auf über 130 °C. Nachteiligerweise kommt es in den im Stand der Technik bekannten Verfahren zum einen zu einer chemischen Veränderung der Ausgangsstoffe durch die während des Herstellungsprozesses verwendeten hohen Temperaturen und somit zu einer verringerten Wiederfindung der verwendeten Zuckeraustauschstoffe im fertigen Produkt, zum anderen führt diese chemische Veränderung oftmals zu einer unerwünschten Bräunung/Trübung der erhaltenen Hartkaramellen. Ferner wird im Stand der Technik beschrieben, dass Isomaltulose nachteiligerweise sehr schnell aus einer übersättigten Lösung kristallisiert, wobei die WO 2012/092255 A1 lehrt, der Lösung zur Verhinderung der Kristallisation beispielsweise Inulin zuzugeben. Schließlich ist es gerade Hartkaramellen eigen, insbesondere unter widrigen Umweltbedingungen eine geringe Lagerstabilität aufzuweisen, insbesondere Wasser aufzunehmen und zu zerfließen oder partiell oder vollständig zu kristallisieren.

Der vorliegenden Erfindung liegt das technische Problem zugrunde die Nachteile der im Stand der Technik bekannten Verfahren zur Herstellung von Isomaltulose-haltigen Hartkaramellen zu überwinden. Das der vorliegenden Erfindung zugrunde liegende technische Problem liegt insbesondere auch darin, lagerstabile Hartkaramellen mit einer hohen Wiederfindungsrate von Isomaltulose bereitzustellen, die optisch attraktiv und organoleptisch vorteilhaft sind.

Die vorliegende Erfindung löst das ihr zugrunde liegende Problem durch den Gegenstand der unabhängigen Ansprüche.

Die vorliegende Erfindung betrifft eine Hartkaramelle, enthaltend Isomaltulose in einer Menge von 50 bis 100 Gew.-%, insbesondere 60 bis 98 Gew.-%, (jeweils bezogen auf die Gesamttrockensubstanz der Hartkaramelle), wobei die Hartkaramelle einen Kern und eine geschlossene mikrokristalline Oberflächenschicht mit einer Dicke von höchstens 1 mm aufweist, insbesondere weniger als 1 mm, insbesondere 0,1 bis 0,3 mm und wobei die Hartkaramelle mindestens einen Hilfs-oder Zusatzstoff umfassen kann.

Die erfindungsgemäße Hartkaramelle zeichnet sich also insbesondere dadurch aus, dass sie eine spezielle Oberflächenschicht aufweist, insbesondere eine solche, die aus Isomaltulose-Kristallen aufgebaut ist und einen ansonsten im Wesentlichen amorphen Hartkaramellenkern umschließt.

Die erfindungsgemäß bereitgestellten Hartkaramellen zeichnen sich durch eine hohe Lagerstabilität aus, insbesondere eine solche, die sich durch eine geringe Wasseraufnahme und eine geringe Zerfließneigung auszeichnet. Die erfindungsgemäßen Hartkaramellen sind optisch ebenso wie organoleptisch attraktiv und sind daher ernstzunehmende Konkurrenzprodukt zu üblichen Hartkaramellen auf Glucose- und/oder Saccharose-Basis, die allerdings im Unterschied zu den erfindungsgemäßen Hartkaramellen keinen gesundheitlichen Mehrwert haben.

In den Hartkaramellen gemäß der vorliegenden Erfindung liegt die darin enthaltene Isomaltulose im Wesentlichen amorph vor, wobei die Hartkaramellen lediglich eine dünne geschlossene mikrokristalline Oberflächenschicht mit einer Dicke von höchstens 1 mm, insbesondere weniger als 1 mm, aufweisen.

In einer besonders bevorzugten Ausführungsform weist die geschlossene mikrokristalline Oberflächenschicht eine Dicke von 0,01 bis 1 mm, insbesondere 0,05 bis 1 mm, insbesondere 0,1 bis 1 mm, insbesondere 0,15 bis 0,9 mm, insbesondere 0,1 bis 0,5 mm, insbesondere 0,15 bis 0,5 mm, insbesondere 0,1 bis 0,3 mm, auf.

In einer bevorzugten Ausführungsform der vorliegenden Erfindung liegt die Isomaltulose im Kern der Hartkaramelle nicht vollständig kristallisiert vor. Bevorzugt liegt die Isomaltulose im Kern der Hartkaramelle amorph vor.

In einer weiteren bevorzugten Ausführungsform der vorliegenden Erfindung weist die Hartkaramelle einen transparenten Kern auf.

Bevorzugt weist eine erfindungsgemäße Hartkaramelle keine Bräunung, insbesondere keine Dunkelfärbung, auf.

In einer bevorzugten Ausführungsform der vorliegenden Erfindung zeichnet sich die erfindungsgemäße Hartkaramelle durch eine hohe Lagerstabilität.

Bevorzugt weist die Hartkaramelle gemäß der vorliegenden Erfindung eine hohe Formstabilität auf.

In einer weiteren bevorzugten Ausführungsform der vorliegenden Erfindung ist die Hartkaramelle nicht klebrig. Bevorzugt sind die erfindungsgemäßen Hartkaramellen nicht hygroskopisch.

Durch den Erhalt nicht klebriger Isomaltulose-haltiger Hartkaramellen ist es vorteilhafterweise möglich, diese lose zu verpacken, ohne dass die einzelnen Hartkaramellen miteinander oder mit der Verpackung verkleben.

In einer bevorzugten Ausführungsform der vorliegenden Erfindung weist die Hartkaramelle einen Restwassergehalt von 1,5 bis 3 Gew.-%, bevorzugt 1,9 bis 2,6 Gew.-% (bezogen auf das Gesamtgewicht der Hartkaramelle) auf.

In einer besonders bevorzugten Ausführungsform weist die erfindungsgemäße Hartkaramelle 50 bis 100 Gew.-%, insbesondere 60 bis 100 Gew.-%, insbesondere 65 bis 100 Gew.-%, insbesondere 70 bis 100 Gew.-%, insbesondere 80 bis 100 Gew.-%, insbesondere 85 bis 100 Gew.-%, insbesondere 90 bis 100 Gew.-%, insbesondere 95 bis 100 Gew.-% Isomaltulose (jeweils bezogen auf die Gesamttrockensubstanz der Hartkaramelle) auf. Insbesondere weist die erfindungsgemäße Hartkaramelle 80 bis 100 Gew.-% Isomaltulose (bezogen auf die Gesamttrockensubstanz der Hartkaramelle) auf.

In einer besonders bevorzugten Ausführungsform weist die erfindungsgemäße Hartkaramelle 50 bis 98 Gew.-%, insbesondere 60 bis 98 Gew.-%, insbesondere 65 bis 98 Gew.-%, insbesondere 70 bis 98 Gew.-%, insbesondere 80 bis 98 Gew.-%, insbesondere 85 bis 98 Gew.-%, insbesondere 90 bis 98 Gew.-%, Isomaltulose (jeweils bezogen auf die Gesamttrockensubstanz der Hartkaramelle) auf.

In der vorliegenden Erfindung umfasst die erfindungsgemäße Hartkaramelle mindestens einen Hilfs- oder Zusatzstoff. Dieser mindestens eine Hilfs- oder Zusatzstoff ist bevorzugt ausgewählt aus der Gruppe bestehend aus Farbstoffen, Geschmacksstoffen, Aromen, lebensmittelverträgliche Säuren oder saure Salze, Konservierungsmittel, Wirkstoffe, Füllstoffe, Fette, Fettersatzstoffe, Öle, Bindemittel, Milcherzeugnis, Emulgatoren, Intensiv-Süßstoffe, medizinisch wirksame Stoffe, Zuckeralkohole, Polysaccharide, Oligosaccharide, weiterer Zucker, Mineralsalze, insbesondere Salze mit Ca²⁺, NaCl, Trinatriumcitrat, Salze mit Phosphat oder Salze mit Mg²⁺.

In einer bevorzugten Ausführungsform der vorliegenden Erfindung umfasst die Hartkaramelle mindestens eine Säure und/oder ein saures Salz. Bevorzugt umfasst die Hartkaramelle mindestens eine organische Säure, insbesondere eine organische Säure ausgewählt aus der Gruppe bestehend aus Zitronensäure, Äpfelsäure, Milchsäure, Weinsäure und Ascorbinsäure.

In einer weiteren bevorzugten Ausführungsform der vorliegenden Erfindung ist die Hartkaramelle frei, beziehungsweise im Wesentlichen frei, von Säure.

Im "Wesentlichen frei" im Zusammenhang mit der vorliegenden Erfindung bedeutet, sie weist Komponenten, hier freie Säuren und/oder saure Salze von Säuren, in jeweils so geringen Anteilen auf, dass der Fachmann darunter kein diese Komponenten enthaltende Hartkaramelle mehr versteht.

Bevorzugt weist die erfindungsgemäße Hartkaramelle weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.-%, bevorzugt weniger als 0,01 Gew.-% Säure und/oder saure Salze auf (jeweils bezogen auf die Gesamttrockensubstanz der Hartkaramelle).

In einer weiteren bevorzugten Ausführungsform der vorliegenden Erfindung ist die Hartkaramelle frei, insbesondere im Wesentlichen frei, von Fett. In einer weiteren Ausführungsform ist die erfindungsgemäße Hartkaramelle frei, insbesondere im Wesentlichen frei, von Öl. In beiden Fällen ist der Anteil an Fett und/oder Öl in der Hartkaramelle so gering, dass der Fachmann nicht von einer Fett- und/oder Öl-haltigen Hartkaramelle ausgeht. Bevorzugt weist die erfindungsgemäße Hartkaramelle weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.-%, bevorzugt weniger als 0,01 Gew.-%, Fett und/oder Öl oder Fett- und/oder Öl-haltige Bestandteile auf (jeweils bezogen auf die Gesamttrockensubstanz der Hartkaramelle).

In einer bevorzugten Ausführungsform der vorliegenden Erfindung weist die erfindungsgemäße Hartkaramelle als einzigen und alleinig vorkommenden Zucker Isomaltulose auf. In einer weiteren bevorzugten Ausführungsform weist die erfindungsgemäße Hartkaramelle Isomaltulose als einziges und alleinig vorkommendes körpergebendes süßendes Agens, insbesondere als einziges und alleinig vorkommendes süßendes Agens, auf.

In einer bevorzugten Ausführungsform der vorliegenden Erfindung enthält die Hartkaramelle mindestens einen weiteren Zucker, insbesondere Saccharose, Glucose, insbesondere Glucosesirup mit Dextrose Equivalent 40 (DE40), und/oder Fructose.

In einer besonders bevorzugten Ausführungsform der vorliegenden Erfindung weist die Hartkaramelle Saccharose, Glucose oder Saccharose und Glucose in einer Menge von höchstens 40 Gew.-% auf (bezogen auf die Gesamttrockensubstanz der Hartkaramelle) auf.

Insbesondere weist die Hartkaramelle gemäß der vorliegenden Erfindung Saccharose, Glucose oder Saccharose und Glucose in einer Menge von höchstens 30 Gew.-%, bevorzugt höchstens 25 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-% (jeweils bezogen auf die Gesamttrockensubstanz der Hartkaramelle) auf.

Bevorzugt weist die Hartkaramelle gemäß der vorliegenden Erfindung Saccharose, Glucose oder Saccharose und Glucose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-% (jeweils bezogen auf die Gesamttrockensubstanz der Hartkaramelle) auf.

Bevorzugt weist die Hartkaramelle gemäß der vorliegenden Erfindung Saccharose in einer Menge von höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz der Hartkaramelle) auf.

Besonders bevorzugt weist die Hartkaramelle Saccharose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz der Hartkaramelle) auf.

Bevorzugt weist die Hartkaramelle gemäß der vorliegenden Erfindung Glucose in einer Menge von höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz der Hartkaramelle) auf.

Besonders bevorzugt weist die Hartkaramelle Glucose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz der Hartkaramelle) auf.

Bevorzugt weist die Hartkaramelle gemäß der vorliegenden Erfindung Fructose in einer Menge von höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz der Hartkaramelle) auf.

Besonders bevorzugt weist die Hartkaramelle Fructose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz der Hartkaramelle) auf.

In einer besonders bevorzugten Ausführungsform weist die Hartkaramelle als alleinige Zucker, insbesondere allein Saccharose und Isomaltulose auf, insbesondere 10 bis 40 Gew.-% Saccharose und 60 bis 90 Gew.-% Isomaltulose, insbesondere 20 bis 40 Gew.-% Saccharose und 60 bis 80 Gew.-% Isomaltulose, insbesondere 20 bis 30 Gew.-% Saccharose und 70 bis 80 Gew.- % Isomaltulose (jeweils bezogen auf die Gesamttrockensubstanz der Hartkaramelle).

In einer besonders bevorzugten Ausführungsform weist die Hartkaramelle als alleinige Zucker, insbesondere allein Glucose und Isomaltulose auf, insbesondere 1 bis 15 Gew.-% Glucose und 85 bis 99 Gew.-% Isomaltulose, insbesondere 1 bis 10 Gew.-% Glucose und 90 bis 99 Gew.-% Isomaltulose, insbesondere 5 bis 10 Gew.-% Glucose und 90 bis 95 Gew.-% Isomaltulose (jeweils bezogen auf die Gesamttrockensubstanz der Hartkaramelle).

In einer besonders bevorzugten Ausführungsform weist die Hartkaramelle als alleinige Zucker, insbesondere allein Saccharose, Glucosesirup mit Dextrose Equivalent 40 (DE40) und Isomaltulose auf, insbesondere 15 bis 35 Gew.-% Saccharose, 15 bis 25 Gew.-% DE40 und 40 bis 70 Gew.-% Isomaltulose, insbesondere 20 bis 30 Gew.-% Saccharose, 20 bis 25 Gew.-% DE40 und 45 bis 60 Gew.-% Isomaltulose (jeweils bezogen auf die Gesamttrockensubstanz der Hartkaramelle).

In einer besonders bevorzugten Ausführungsform weist die Hartkaramelle keine Glucose auf. In einer besonders bevorzugten Ausführungsform weist die Hartkaramelle keine Saccharose auf. In einer besonders bevorzugten Ausführungsform weist die Hartkaramelle keine Glucose und keine Saccharose auf.

In einer bevorzugten Ausführungsform der vorliegenden Erfindung enthält die Hartkaramelle mindestens ein Polysaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz der Hartkaramelle). Bevorzugt enthält die erfindungsgemäße Hartkaramelle kein Polysaccharid.

In einer weiteren bevorzugten Ausführungsform der vorliegenden Erfindung enthält die Hartkaramelle mindestens ein Oligosaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz der Hartkaramelle). Bevorzugt enthält die erfindungsgemäße Hartkaramelle kein Oligosaccharid.

Bevorzugt enthält die erfindungsgemäße Hartkaramelle kein Oligosaccharid und kein Polysaccharid. Besonders bevorzugt enthält die Hartkaramelle kein Oligosaccharid und/oder Polysaccharid ausgewählt aus der Gruppe bestehend aus Inulin, unverdauliches Dextrin, Polydextrose, Sucomalt oder Kombinationen davon.

Bevorzugt umfasst die erfindungsgemäße Hartkaramelle mindestens einen Zuckeralkohol. Bevorzugt ist der mindestens eine Zuckeralkohol ausgewählt aus der Gruppe bestehend aus Isomalt, 1,6-GPS (6-O-α-D-Glucopyranosyl-D-Sorbit), 1,1-GPM (1-O-α-D-Glucopyranosyl-D-Mannit), 1,1-GPS (1-O-α-D-Glucopyranosyl-D-Sorbit), hydrierte und/oder nicht hydrierte Stärkehydrolysate (HSH), Xylit, Sorbit, Erythrit, Mannit, Maltit, Laktit, Maltodextrine oder Mischungen davon.

Bevorzugt weist die erfindungsgemäße Hartkaramelle mindestens einen medizinisch wirksamen Stoff auf, insbesondere Antihistamine, Antibiotika, Fungizide, Microbiozide, Hexylresorcin, Dextromethorphan-Hydrobromid, Menthol, Nicotin, Coffein, Vitamine, Zink, Eukalyptus, Benzocain, Cetylpyridinium, Fluoride, Phenylpropanolamin oder andere pharmazeutisch wirksame Substanzen. Bei Verwendung als medizinisch aktive Hartkaramelle kann der Wirkstoff in der Hartkramelle in einer Menge von zum Beispiel 1,0 bis 15 mg pro Einheit enthalten sein.

In einer bevorzugten Ausführungsform der vorliegenden Erfindung umfasst die Hartkaramelle mindestens einen Geschmacks-/Aromastoff. Besonders bevorzugt umfasst die Hartkaramelle mindestens einen Geschmacks-/Aromastoff ausgewählt aus der Gruppe bestehend aus Pflanzen- und Fruchtöle, Zitrusöle, Blüten- oder Blattöle, Öle aus Kirsche, Erdbeere, Menthol, Eukalyptus, Pfefferminz, Honig oder grüner Minze, Fruchtessenzen und Grüner-Tee-Extrakt. Bevorzugt umfasst die Hartkaramelle den mindestens einen Geschmacks-/Aromastoff in einer Menge von 0,05 bis 3 Gew.-% (bezogen auf die Gesamttrockensubstanz der Hartkaramelle).

In einer weiteren bevorzugten Ausführungsform umfasst die Hartkaramelle mindestens ein Bindemittel. Bevorzugt umfasst die Hartkaramelle mindestens ein Bindemittel ausgewählt aus der Gruppe bestehend aus Alginate, Cellulose, Gelatine und pflanzliche Gummis.

In einer weiteren bevorzugten Ausführungsform umfasst die erfindungsgemäße Hartkaramelle mindestens einen Intensiv-Süßstoff. Besonders bevorzugt umfasst die erfindungsgemäße Hartkaramelle mindestens einen Intensiv-Süßstoff ausgewählt aus der Gruppe bestehend aus Aspartam, Cyclamat, Acesulfam-K, Saccharin, Sucralose, Glycyrrhizin, Monellin, Dulcin, Naringin, Dihydrochalkon, Neotame, Alitame, Neohesperidin DC (Dihydrochalkon), Stevioside, Thaumatin oder Mischungen davon.

In einer bevorzugten Ausführungsform der vorliegenden Erfindung ist die erfindungsgemäße Hartkaramelle frei von Intensiv-Süßstoffen.

In einer bevorzugten Ausführungsform der vorliegenden Erfindung umfasst die Hartkaramelle mindestens einen Farbstoff. Bevorzugt ist der mindestens eine Farbstoff ein synthetischer Farbstoff, insbesondere ausgewählt aus der Gruppe bestehend aus Erythrosin, Indigo Carmine, Allurarot, E171, Tartrazin und Titandioxid. Bevorzugt ist der mindestens eine Farbstoff ein natürlicher Farbstoff, insbesondere ausgewählt aus der Gruppe bestehend aus Carotinoide, zum Beispiel Beta-Carotin, Riboflavine, Chlorophyll, Anthocyane, zum Beispiel aus der Roten Bete, Betanin. Bevorzugt umfasst die erfindungsgemäße Hartkaramelle den mindestens einen synthetischen Farbstoff in einer Menge von 0,01 bis 0,03 Gew.-% (bezogen auf die Gesamttrockensubstanz der Hartkaramelle). In einer weiteren bevorzugten Ausführungsform umfasst die erfindungsgemäße Hartkaramelle den mindestens einen natürlichen Farbstoff in einer Menge von 0,1 bis 1 Gew.-% (bezogen auf die Gesamttrockensubstanz der Hartkaramelle). Bevorzugt umfasst die erfindungsgemäße Hartkaramelle mindestens einen synthetischen und mindestens einen natürlichen Farbstoff.

In einer bevorzugten Ausführungsform der vorliegenden Erfindung ist die erfindungsgemäße Hartkaramelle frei von Farbstoffen.

In einer bevorzugten Ausführungsform umfasst die erfindungsgemäße Hartkaramelle mindestens ein Milcherzeugnis, insbesondere ein Molkereierzeugnis, bevorzugt Vollmilchpulver, Sahne oder Butter. Bevorzugt umfasst die erfindungsgemäße Hartkaramelle das mindestens eine Milcherzeugnis, insbesondere Molkereierzeugnis, bevorzugt Vollmilchpulver, Sahne oder Butter, in einer Menge von 0 bis 9 Gew.-%, insbesondere 1 bis 8 Gew.-% (jeweils bezogen auf die Gesamtgewicht der Hartkaramelle).

In einer weiteren bevorzugten Ausführungsform umfasst die erfindungsgemäße Hartkaramelle mindestens einen Emulgator, insbesondere Lecithin, zum Beispiel Sojalecithin. Bevorzugt umfasst die erfindungsgemäße Hartkaramelle den mindestens einen Emulgator in einer Menge von 0 bis 5 Gew.-%, insbesondere 1 bis 4 Gew.-% (jeweils bezogen auf die Gesamttrockensubstanz der Hartkaramelle).

Die vorliegende Erfindung betrifft ferner ein Verfahren zur Herstellung einer Isomaltulose-haltigen Hartkaramelle, umfassend die Schritte:
a) Bereitstellung eines wässrigen Mediums, enthaltend Isomaltulose in einer Menge von 50 bis 100 Gew.-% (bezogen auf die Gesamttrockensubstanz),
b) Anlegen eines reduzierten Drucks von höchstens 0,4 bar unter Durchmischung bei einer Temperatur von höchstens 130 °C, insbesondere höchstens 125 °C,
c) Abkühlen des wässrigen Mediums auf eine Temperatur von 70 bis 90 °C bei atmosphärischem Druck zum Erhalt einer plastischen Masse und
d) Formen der in Schritt c) erhaltenen plastischen Masse und Erhalten einer Isomaltulose-haltigen Hartkaramelle aufweisend eine geschlossene mikrokristalline Oberflächenschicht mit einer Dicke von höchstens 1 mm und wobei die Isomaltulose-haltige Hartkaramelle mindestens einen Hilfs-oder Zusatzstoff umfassen kann.

Das erfindungsgemäße Verfahren zeichnet sich insbesondere dadurch aus, dass das bereitgestellte wässrige Medium, insbesondere die bereitgestellte wässrige Lösung, einem reduzierten Druck von höchstens 0,4 bar und einer vergleichsweise geringen Temperatur von mindestens 130 °C, insbesondere höchstens 125 °C, insbesondere höchstens 110 °C, insbesondere höchstens 105 °C, ausgesetzt wird, und wobei dies unter Durchmischung stattfindet. Die aufgrund zu hoher Prozesstemperaturen auftretende Dunkelfärbung Zuckerhaltiger Hartkaramellen kann so reduziert oder ganz verhindert werden. Erfindungsgemäß können so einen niedrigen Restwassergehalt aufweisende lagerstabile Hartkaramellen mit hoher Wiederfindungsrate von Isomaltulose bereitgestellt werden, die optisch attraktiv sind und keine unerwünschten Färbungen, insbesondere Dunkelfärbungen, aufweisen. Erfindungsgemäß kann so insbesondere eine derartige Hartkaramelle mit einer sehr dünnen geschlossenen mikrokristallinen Oberflächenschicht mit einer Dicke von insbesondere 0,1 bis 0,3 mm hergestellt werden.

Das erfindungsgemäße Verfahren zur Herstellung einer Isomaltulose-haltigen Hartkaramelle sieht somit vor, zunächst ein wässriges Medium bereitzustellen, in der Isomaltulose in einer Menge von 50 bis 100 Gew.-%, insbesondere 60 bis 98 Gew.-%, (jeweils bezogen auf die Gesamttrockensubstanz) vorliegt. An das in Schritt a) bereitgestellte Isomaltulose-haltige wässrige Medium wird anschließend ein Druck von höchstens 0,4 bar bei einer Temperatur von höchstens 130 °C angelegt. In einer besonders bevorzugten Ausführungsform ist das wässrige Medium eine wässrige Lösung oder ein wässriger Sirup. In einer besonders bevorzugten Ausführungsform ist das wässrige Medium eine wässrige Lösung. In einer besonders bevorzugten Ausführungsform ist das wässrige Medium ein wässriger Sirup.

Dabei erfolgt das Anlegen des Drucks an das wässrige Medium, insbesondere die wässrige Lösung, unter Durchmischung, wobei die Durchmischung durch jegliche dem Fachmann bekannte geeignete Mittel zur Durchmischung wässriger Medien, insbesondere wässriger Lösungen, erfolgen kann. Besonders bevorzugt erfolgt die Durchmischung des wässrigen Mediums, insbesondere der wässrigen Lösung, während des Anlegens des Drucks von höchstens 0,4 bar an das wässrige Medium bei einer Temperatur von höchstens 130 °C kontinuierlich. Im Anschluss erfolgt in Schritt c) ein Abkühlen des wässrigen Mediums, insbesondere der wässrigen Lösung, auf eine Temperatur von 70 bis 90 °C bei atmosphärischem Druck, wodurch eine plastische Masse erhalten wird. Schließlich wird in Schritt d), vorzugsweise bei einer Temperatur von 70 °C bis 90 °C, die in Schritt c) erhaltene plastische Masse zu einer Isomaltulose-haltigen Hartkaramelle geformt, insbesondere geprägt.

In besonders bevorzugter Ausführungsform findet die Durchmischung in Verfahrensschritt b) kontinuierlich, das heißt während der gesamten Verfahrensdauer des Verfahrensschritts b) statt. Insbesondere wird die Durchmischung in Verfahrensschritt b) so durchgeführt, dass die Isomaltulose-haltige wässrige Lösung homogen durchmischt wird, das heißt sämtliche Isomaltulose-Moleküle ein identisches Reaktionsumfeld aufweisen.

Ohne an die Theorie gebunden zu sein, führt das erfindungsgemäße Verfahren zu einer hohen Wiederfindung von Isomaltulose, welche in dem in Schritt a) bereitgestellte wässrige Medium vorhanden war, in der in Verfahrensschritt d) erhaltenen Isomaltulose-haltigen Hartkaramelle. Darüber hinaus weist eine Hartkramelle erhalten aus dem erfindungsgemäßen Verfahren ein verbessertes Aussehen auf, insbesondere keine Bräunung, insbesondere im Wesentlichen keine Bräunung. Insbesondere weisen die Hartkaramelle eine, insbesondere leicht, gelbe Farbe auf.

In einer bevorzugten Ausführungsform der vorliegenden Erfindung ist das wässrige Medium eine wässrige Lösung, insbesondere ein wässriger Sirup.

In einer besonders bevorzugten Ausführungsform weist das in Schritt a) bereitgestellte wässrige Medium, insbesondere die wässrige Lösung oder der wässrige Sirup, einen Trockensubstanzgehalt von 20 bis 80 Gew.-%, insbesondere 30 bis 70 Gew.-%, insbesondere 40 bis 65 Gew.-%, insbesondere 45 bis 65 Gew.-% (jeweils bezogen die Gesamtmasse des wässrigen Mediums, insbesondere der wässrigen Lösung oder des wässrigen Sirups) auf.

In einer bevorzugten Ausführungsform der vorliegenden Erfindung enthält das in Schritt a) bereitgestellte wässrige Medium, insbesondere die wässrige Lösung oder der wässrige Sirup, Isomaltulose in einer Menge von 50 bis 100 Gew.-%, insbesondere 60 bis 100 Gew.-%, insbesondere 60 bis 100 Gew.-%, insbesondere 65 bis 100 Gew.-%, bevorzugt 70 bis 100 Gew.- %, bevorzugt 75 bis 100 Gew.-%, bevorzugt 80 bis 100 Gew.-%, bevorzugt 85 bis 100 Gew.-%, bevorzugt 90 bis 100 Gew.-%, bevorzugt 95 bis 100 Gew.-% (jeweils bezogen auf die Gesamttrockensubstanz).

In einer bevorzugten Ausführungsform der vorliegenden Erfindung enthält das in Schritt a) bereitgestellte wässrige Medium, insbesondere die wässrige Lösung oder der wässrige Sirup, Isomaltulose in einer Menge von 50 bis 98 Gew.-%, insbesondere 60 bis 100 Gew.-%, insbesondere 60 bis 98 Gew.-%, insbesondere 65 bis 98 Gew.-%, bevorzugt 70 bis 98 Gew.-%, bevorzugt 75 bis 98 Gew.-%, bevorzugt 80 bis 98 Gew.-%, bevorzugt 85 bis 98 Gew.-%, bevorzugt 90 bis 98 Gew.-%, bevorzugt 95 bis 98 Gew.-% (jeweils bezogen auf die Gesamttrockensubstanz).

In einer bevorzugten Ausführungsform der vorliegenden Erfindung umfasst das in Schritt a) bereitgestellte wässrige Medium, insbesondere die wässrige Lösung oder der wässrige Sirup, mindestens einen Hilfs- oder Zusatzstoff. Dieser mindestens eine Hilfs- oder Zusatzstoff ist bevorzugt ausgewählt aus der Gruppe bestehend aus Farbstoffen, Geschmacksstoffen, Aromen, lebensmittelverträgliche Säuren oder saure Salze, Konservierungsmittel, Wirkstoffe, Füllstoffe, Fette, Fettersatzstoffe, Öle, Bindemittel, Milcherzeugnis, Emulgatoren, Intensiv-Süßstoffe, medizinisch wirksame Stoffe, Zuckeralkohole, Polysaccharide, Oligosaccharide, weiterer Zucker, Mineralsalze, insbesondere Salze mit Ca²⁺, NaCl, Trinatriumcitrat, Salze mit Phosphat oder Salze mit Mg²⁺.

In einer bevorzugten Ausführungsform der vorliegenden Erfindung umfasst das in Schritt a) bereitgestellte wässrige Medium, insbesondere die wässrige Lösung oder der wässrige Sirup, mindestens eine Säure und/oder ein saures Salz. Bevorzugt umfasst das wässrige Medium, insbesondere die wässrige Lösung oder der wässrige Sirup, mindestens eine organische Säure, insbesondere eine organische Säure ausgewählt aus der Gruppe bestehend aus Zitronensäure, Äpfelsäure, Milchsäure, Weinsäure und Ascorbinsäure.

In einer weiteren bevorzugten Ausführungsform der vorliegenden Erfindung ist das in Schritt a) bereitgestellte wässrige Medium, insbesondere die wässrige Lösung oder der wässrige Sirup, frei, beziehungsweise im Wesentlichen frei, von Säure. Das heißt, es weist freie Säuren und/oder saure Salze von Säuren in jeweils so geringen Anteilen auf, dass der Fachmann darunter kein säurehaltiges wässriges Medium, insbesondere keine wässrige Lösung oder keinen wässrigen Sirup, mehr versteht. Bevorzugt weist das in Schritt a) bereitgestellte wässrige Medium, insbesondere die wässrige Lösung oder der wässrige Sirup, weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.-%, bevorzugt weniger als 0,01 Gew.-% Säure und/oder saure Salze auf (jeweils bezogen auf die Gesamttrockensubstanz des wässrigen Mediums, insbesondere der wässrigen Lösung oder des wässrigen Sirups).

In einer weiteren bevorzugten Ausführungsform der vorliegenden Erfindung ist das in Schritt a) bereitgestellte wässrige Medium, insbesondere die wässrige Lösung oder der wässrige Sirup, frei, insbesondere im Wesentlichen frei, von Fett. In einer weiteren Ausführungsform ist das in Schritt a) bereitgestellte wässrige Medium, insbesondere die wässrige Lösung oder der wässrige Sirup, frei, insbesondere im Wesentlichen frei, von Öl. In beiden Fällen ist der Anteil an Fett und/oder Öl in dem wässrigen Medium, insbesondere die wässrige Lösung oder der wässrige Sirup, so gering, dass der Fachmann nicht von einem Fett- und/oder Öl-haltigen wässrigen Medium, insbesondere einer wässrigen Lösung oder einem wässrigen Sirup, ausgeht. Bevorzugt weist das in Schritt a) bereitgestellte wässrige Medium, insbesondere die wässrige Lösung oder der wässrige Sirup, weniger als 5 Gew.-%, bevorzugt weniger als 4 Gew.-%, bevorzugt weniger als 3 Gew.-%, bevorzugt weniger als 2 Gew.-%, bevorzugt weniger als 1 Gew.-%, bevorzugt weniger als 0,5 Gew.-%, bevorzugt weniger als 0,1 Gew.-%, bevorzugt weniger als 0,05 Gew.- %, bevorzugt weniger als 0,01 Gew.-%, Fett und/oder Öl oder Fett- und/oder Öl-haltige Bestandteile auf (jeweils bezogen auf die Gesamttrockensubstanz des wässrigen Mediums, insbesondere der wässrigen Lösung oder des wässrigen Sirups).

In einer bevorzugten Ausführungsform der vorliegenden Erfindung weist das in Schritt a) bereitgestellte wässrige Medium, insbesondere die wässrige Lösung oder der wässrige Sirup, als einzigen und alleinig vorkommenden Zucker Isomaltulose auf. In einer weiteren bevorzugten Ausführungsform weist das in Schritt a) bereitgestellte wässrige Medium, insbesondere die wässrige Lösung oder der wässrige Sirup, Isomaltulose als einziges und alleinig vorkommendes körpergebendes süßendes Agens, insbesondere als einziges und alleinig vorkommendes süßendes Agens, auf.

In einer bevorzugten Ausführungsform der vorliegenden Erfindung enthält das in Schritt a) bereitgestellte wässrige Medium, insbesondere die wässrige Lösung oder der wässrige Sirup, mindestens einen weiteren Zucker, insbesondere Saccharose, Glucose, insbesondere Glucosesirup mit Dextrose Equivalent 40 (DE40), und/oder Fructose.

In einer besonders bevorzugten Ausführungsform der vorliegenden Erfindung weist das wässrige Medium, insbesondere die wässrige Lösung oder der wässrige Sirup, Saccharose, Glucose oder Saccharose und Glucose in einer Menge von höchstens 40 Gew.-% (bezogen auf die Gesamttrockensubstanz des wässrigen Mediums, insbesondere der wässrigen Lösung oder des wässrigen Sirups) auf.

Insbesondere weist das wässrige Medium, insbesondere die wässrige Lösung oder der wässrige Sirup, Saccharose, Glucose oder Saccharose und Glucose in einer Menge von höchstens 30 Gew.-%, bevorzugt höchstens 25 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-% (jeweils bezogen auf die Gesamttrockensubstanz des wässrigen Mediums, insbesondere der wässrigen Lösung oder des wässrigen Sirups) auf.

Bevorzugt weist das wässrige Medium, insbesondere die wässrige Lösung oder der wässrige Sirup, Saccharose, Glucose oder Saccharose und Glucose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-% (jeweils bezogen auf die Gesamttrockensubstanz des wässrigen Mediums, insbesondere der wässrigen Lösung oder des wässrigen Sirups) auf.

Bevorzugt weist das in Schritt a) bereitgestellte wässrige Medium, insbesondere die wässrige Lösung oder der wässrige Sirup, gemäß der vorliegenden Erfindung Saccharose in einer Menge von höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz des wässrigen Mediums, insbesondere der wässrigen Lösung oder des wässrigen Sirups) auf.

Besonders bevorzugt weist das in Schritt a) bereitgestellte wässrige Medium, insbesondere die wässrige Lösung oder der wässrige Sirup, Saccharose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

Bevorzugt weist das in Schritt a) bereitgestellte wässrige Medium, insbesondere die wässrige Lösung oder der wässrige Sirup, gemäß der vorliegenden Erfindung Glucose in einer Menge von höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz des wässrigen Mediums, insbesondere der wässrigen Lösung oder des wässrigen Sirups) auf.

Besonders bevorzugt weist das in Schritt a) bereitgestellte wässrige Medium, insbesondere die wässrige Lösung oder der wässrige Sirup, Glucose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

In einer besonders bevorzugten Ausführungsform kann die Glucose in Form von Glucose-Sirup eingesetzt werden.

Bevorzugt weist das in Schritt a) bereitgestellte wässrige Medium, insbesondere die wässrige Lösung oder der wässrige Sirup, gemäß der vorliegenden Erfindung Fructose in einer Menge von höchstens 40 Gew.-%, bevorzugt höchstens 30 Gew.-%, bevorzugt höchstens 25 Gew.-%, bevorzugt höchstens 20 Gew.-%, bevorzugt höchstens 15 Gew.-%, bevorzugt höchstens 10 Gew.-%, bevorzugt höchstens 5 Gew.-%, (jeweils bezogen auf die Gesamttrockensubstanz des wässrigen Mediums, insbesondere der wässrigen Lösung oder des wässrigen Sirups) auf.

Besonders bevorzugt weist das in Schritt a) bereitgestellte wässrige Medium, insbesondere die wässrige Lösung oder der wässrige Sirup, Fructose in einer Menge von 2 bis 40 Gew.-%, bevorzugt 5 bis 30 Gew.-%, bevorzugt 7,5 bis 27,5 Gew.-%, bevorzugt 10 bis 25 Gew.-%, bevorzugt 12,5 bis 22,5 Gew.-%, bevorzugt 15 bis 20 Gew.-%, (jeweils bezogen auf die Gesamttrockensubstanz des wässrigen Mediums, insbesondere der wässrigen Lösung oder des wässrigen Sirups) auf.

Besonders bevorzugt weist das in Schritt a) bereitgestellte wässrige Medium, insbesondere die wässrige Lösung oder der wässrige Sirup, als alleinige Zucker, insbesondere allein Saccharose und Isomaltulose auf, insbesondere 10 bis 40 Gew.-% Saccharose und 60 bis 90 Gew.-% Isomaltulose, insbesondere 20 bis 40 Gew.-% Saccharose und 60 bis 80 Gew.-%, insbesondere 20 bis 30 Gew.-% Saccharose und 70 bis 80 Gew.-% Isomaltulose (jeweils bezogen auf die Gesamttrockensubstanz des wässrigen Mediums, insbesondere der wässrigen Lösung oder des wässrigen Sirups).

Besonders bevorzugt weist das in Schritt a) bereitgestellte wässrige Medium, insbesondere die wässrige Lösung oder der wässrige Sirup, als alleinige Zucker, insbesondere allein Glucose und Isomaltulose auf, insbesondere 1 bis 15 Gew.-% Glucose und 85 bis 99 Gew.-% Isomaltulose, insbesondere 1 bis 10 Gew.-% Glucose und 90 bis 99 Gew.-% Isomaltulose, insbesondere 5 bis 10 Gew.-% Glucose und 90 bis 95 Gew.-% Isomaltulose (jeweils bezogen auf die Gesamttrockensubstanz des wässrigen Mediums, insbesondere der wässrigen Lösung oder des wässrigen Sirups).

Besonders bevorzugt weist das in Schritt a) bereitgestellte wässrige Medium, insbesondere die wässrige Lösung oder der wässrige Sirup, als alleinige Zucker, insbesondere allein Saccharose, Glucosesirup mit Dextrose Equivalent 40 (DE40) und Isomaltulose auf, insbesondere 15 bis 35 Gew.-% Saccharose, 15 bis 25 Gew.-% DE40 und 40 bis 70 Gew.-% Isomaltulose, insbesondere 20 bis 30 Gew.-% Saccharose, 20 bis 25 Gew.-% DE40 und 45 bis 60 Gew.-% Isomaltulose (jeweils bezogen auf die Gesamttrockensubstanz des wässrigen Mediums, insbesondere der wässrigen Lösung oder des wässrigen Sirups).

Besonders bevorzugt weist das in Schritt a) bereitgestellte wässrige Medium, insbesondere die wässrige Lösung oder der wässrige Sirup, keine Glucose auf. Besonders bevorzugt weist das in Schritt a) bereitgestellte wässrige Medium, insbesondere die wässrige Lösung oder der wässrige Sirup, keine Saccharose auf. Besonders bevorzugt weist das in Schritt a) bereitgestellte wässrige Medium, insbesondere die wässrige Lösung oder der wässrige Sirup, keine Glucose und keine Saccharose auf.

In einer bevorzugten Ausführungsform der vorliegenden Erfindung enthält das in Schritt a) bereitgestellte wässrige Medium, insbesondere die wässrige Lösung oder der wässrige Sirup, mindestens ein Polysaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz des wässrigen Mediums, insbesondere der wässrigen Lösung oder des wässrigen Sirups). Bevorzugt enthält das in Schritt a) bereitgestellte wässrige Medium, insbesondere die wässrige Lösung oder der wässrige Sirup, kein Polysaccharid.

In einer weiteren bevorzugten Ausführungsform der vorliegenden Erfindung enthält das in Schritt a) bereitgestellte wässrige Medium, insbesondere die wässrige Lösung oder der wässrige Sirup, mindestens ein Oligosaccharid in einer Menge von höchstens 5 Gew.-%, bevorzugt höchstens 4 Gew.-%, bevorzugt höchstens 3 Gew.-%, bevorzugt höchstens 2 Gew.-%, bevorzugt höchstens 1 Gew.-%, bevorzugt höchstens 0,5 Gew.-%, bevorzugt höchstens 0,2 Gew.-%, bevorzugt höchstens 0,1 Gew.-% (jeweils bezogen auf die Gesamttrockensubstanz des wässrigen Mediums, insbesondere der wässrigen Lösung oder des wässrigen Sirups). Bevorzugt enthält das in Schritt a) bereitgestellte wässrige Medium, insbesondere die wässrige Lösung oder der wässrige Sirup, kein Oligosaccharid.

Bevorzugt enthält das in Schritt a) bereitgestellte wässrige Medium, insbesondere die wässrige Lösung oder der wässrige Sirup, kein Oligosaccharid und kein Polysaccharid. Besonders bevorzugt enthält das in Schritt a) bereitgestellte wässrige Medium, insbesondere die wässrige Lösung oder der wässrige Sirup, kein Oligosaccharid und/oder Polysaccharid ausgewählt aus der Gruppe bestehend aus Inulin, unverdauliches Dextrin, Polydextrose, Sucomalt oder Kombinationen davon.

Bevorzugt umfasst das in Schritt a) bereitgestellte wässrige Medium, insbesondere die wässrige Lösung oder der wässrige Sirup, mindestens einen Zuckeralkohol. Bevorzugt ist der mindestens eine Zuckeralkohol ausgewählt aus der Gruppe bestehend aus Isomalt, 1,6-GPS, 1,1-GPM, 1,1-GPS, hydrierte und/oder nicht hydrierte Stärkehydrolysate (HSH), Xylit, Sorbit, Erythrit, Mannit, Maltit, Laktit, Maltodextrine oder Mischungen davon.

Bevorzugt weist das in Schritt a) bereitgestellte wässrige Medium, insbesondere die wässrige Lösung oder der wässrige Sirup, mindestens einen medizinisch wirksamen Stoff auf, insbesondere Antihistamine, Antibiotika, Fungizide, Microbiozide, Hexylresorcin, Dextromethorphan-Hydrobromid, Menthol, Nicotin, Coffein, Vitamine, Zink, Eukalyptus, Benzocain, Cetylpyridinium, Fluoride, Phenylpropanolamin oder andere pharmazeutisch wirksame Substanzen. Bei Herstellung einer medizinisch aktiven Hartkaramelle kann der Wirkstoff in dem wässrigen Medium, insbesondere die wässrige Lösung oder der wässrige Sirup, in einer Menge von zum Beispiel 1,0 bis 15 mg pro Einheit enthalten sein.

In einer bevorzugten Ausführungsform der vorliegenden Erfindung umfasst das in Schritt a) bereitgestellte wässrige Medium, insbesondere die wässrige Lösung oder der wässrige Sirup, mindestens einen Geschmacks-/Aromastoff. Besonders bevorzugt umfasst das in Schritt a) bereitgestellte wässrige Medium, insbesondere die wässrige Lösung oder der wässrige Sirup, mindestens einen Geschmacks-/Aromastoff ausgewählt aus der Gruppe bestehend aus Pflanzen- und Fruchtöle, Zitrusöle, Blüten- oder Blattöle, Öle aus Kirsche, Erdbeere, Menthol, Eukalyptus, Pfefferminz, Honig oder grüner Minze, Fruchtessenzen und Grüner-Tee-Extrakt. Bevorzugt umfasst das in Schritt a) bereitgestellte wässrige Medium, insbesondere die wässrige Lösung oder der wässrige Sirup, den mindestens einen Geschmacks-/Aromastoff in einer Menge von 0,05 bis 3 Gew.-% (bezogen auf die Gesamttrockensubstanz des wässrigen Mediums, insbesondere der wässrigen Lösung oder des wässrigen Sirups).

In einer weiteren bevorzugten Ausführungsform umfasst das in Schritt a) bereitgestellte wässrige Medium, insbesondere die wässrige Lösung oder der wässrige Sirup, mindestens ein Bindemittel. Bevorzugt umfasst das in Schritt a) bereitgestellte wässrige Medium, insbesondere die wässrige Lösung oder der wässrige Sirup, mindestens ein Bindemittel ausgewählt aus der Gruppe bestehend aus Alginate, Cellulose, Gelatine und pflanzliche Gummis.

In einer weiteren bevorzugten Ausführungsform umfasst das in Schritt a) bereitgestellte wässrige Medium, insbesondere die wässrige Lösung oder der wässrige Sirup, mindestens einen Intensiv-Süßstoff. Besonders bevorzugt umfasst das in Schritt a) bereitgestellte wässrige Medium mindestens einen Intensiv-Süßstoff ausgewählt aus der Gruppe bestehend aus Aspartam, Cyclamat, Acesulfam-K, Saccharin, Sucralose, Glycyrrhizin, Monellin, Dulcin, Naringin, Dihydrochalkon, Neotame, Alitame, Neohesperidin DC (Dihydrochalkon), Stevioside, Thaumatin oder Mischungen davon.

In einer bevorzugten Ausführungsform der vorliegenden Erfindung ist das in Schritt a) bereitgestellte wässrige Medium, insbesondere die wässrige Lösung oder der wässrige Sirup, frei von Intensiv-Süßstoffen.

In einer bevorzugten Ausführungsform der vorliegenden Erfindung umfasst das in Schritt a) bereitgestellte wässrige Medium, insbesondere die wässrige Lösung oder der wässrige Sirup, mindestens einen Farbstoff. Bevorzugt ist der mindestens eine Farbstoff ein synthetischer Farbstoff, insbesondere ausgewählt aus der Gruppe bestehend aus Erythrosin, Indigo Carmine, Allurarot, E171, Tartrazin und Titandioxid. Bevorzugt ist der mindestens eine Farbstoff ein natürlicher Farbstoff, insbesondere ausgewählt aus der Gruppe bestehend aus Carotinoide, zum Beispiel Beta-Carotin, Riboflavine, Chlorophyll, Anthocyane, zum Beispiel aus der Roten Bete, Betanin. Bevorzugt umfasst das in Schritt a) bereitgestellte wässrige Medium, insbesondere die wässrige Lösung oder der wässrige Sirup, den mindestens einen synthetischen Farbstoff in einer Menge von 0,01 bis 0,03 Gew.-% (bezogen auf die Gesamttrockensubstanz des wässrigen Mediums). In einer weiteren bevorzugten Ausführungsform umfasst das in Schritt a) bereitgestellte wässrige Medium, insbesondere die wässrige Lösung oder der wässrige Sirup, den mindestens einen natürlichen Farbstoff in einer Menge von 0,1 bis 1 Gew.-% (bezogen auf die Gesamttrockensubstanz des wässrigen Mediums). Bevorzugt umfasst das in Schritt a) bereitgestellte wässrige Medium, insbesondere die wässrige Lösung oder der wässrige Sirup, mindestens einen synthetischen und mindestens einen natürlichen Farbstoff.

In einer bevorzugten Ausführungsform der vorliegenden Erfindung ist das in Schritt a) bereitgestellte wässrige Medium frei von Farbstoffen.

In einer bevorzugten Ausführungsform umfasst das in Schritt a) bereitgestellte wässrige Medium, insbesondere die wässrige Lösung oder der wässrige Sirup, mindestens ein Milcherzeugnis, insbesondere ein Molkereierzeugnis, bevorzugt Vollmilchpulver, Sahne oder Butter. Bevorzugt umfasst das in Schritt a) bereitgestellte wässrige Medium das mindestens eine Milcherzeugnis, insbesondere Molkereierzeugnis, bevorzugt Vollmilchpulver, Sahne oder Butter, in einer Menge von 0 bis 9 Gew.-%, insbesondere 1 bis 8 Gew.-% (jeweils bezogen auf die Gesamtgewicht des wässrigen Mediums, insbesondere der wässrigen Lösung oder des wässrigen Sirups).

In einer weiteren bevorzugten Ausführungsform umfasst das in Schritt a) bereitgestellte wässrige Medium, insbesondere die wässrige Lösung oder der wässrige Sirup, mindestens einen Emulgator, insbesondere Lecithin, zum Beispiel Sojalecithin. Bevorzugt umfasst das in Schritt a) bereitgestellte wässrige Medium, insbesondere die wässrige Lösung oder der wässrige Sirup, den mindestens einen Emulgator in einer Menge von 0 bis 5 Gew.-%, insbesondere 1 bis 4 Gew.- % (jeweils bezogen auf die Gesamttrockensubstanz des wässrigen Mediums, insbesondere der wässrigen Lösung oder des wässrigen Sirups).

In einer weiteren bevorzugten Ausführungsform der vorliegenden Erfindung wird das in Schritt a) bereitgestellte wässrige Medium, insbesondere die wässrige Lösung oder der wässrige Sirup, vor Schritt b) in einem Verfahrensschritt a1) auf eine Temperatur von höchstens 130 °C, insbesondere höchstens 125 °C, insbesondere höchstens 100 °C, erhitzt. Besonders bevorzugt wird das in Schritt a) bereitgestellte wässrige Medium, insbesondere die wässrige Lösung oder der wässrige Sirup, vor Schritt b) in einem Verfahrensschritt a1) auf eine Temperatur von 80 bis 125 °C, insbesondere 80 bis 100 °C, bevorzugt 85 bis 95 °C, erhitzt.

Bevorzugt dient Verfahrensschritt a1) dem Auflösen von gegebenenfalls in fester Form vorliegender Isomaltulose im wässrigen Sirup.

Bevorzugt erfolgt das Erhitzen des in Schritt a) bereitgestellte wässrigen Mediums, insbesondere der wässrigen Lösung oder des wässrigen Sirups, vor Schritt b) in einem Verfahrensschritt a1) unter atmosphärischem Druck.

In einer bevorzugten Ausführungsform der vorliegenden Erfindung beträgt in Schritt b) die Temperatur höchstens 125 °C, insbesondere höchstens 120 °C, insbesondere höchstens 110 °C, insbesondere höchstens 105 °C.

In einer bevorzugten Ausführungsform der vorliegenden Erfindung beträgt in Schritt b) die Temperatur 110 bis 130 °C, insbesondere 120 bis 125 °C, insbesondere 110 bis 120 °C, insbesondere 100 bis 120 °C.

In einer bevorzugten Ausführungsform der vorliegenden Erfindung liegt der Druck in Schritt b) in einem Bereich von 0,1 bis 0,4 bar, bevorzugt 0,15 bis 0,4 bar, bevorzugt 0,2 bis 0,4 bar, bevorzugt 0,25 bis 0,4 bar, bevorzugt 0,3 bis 0,4 bar.

Bevorzugt beträgt der Druck in Schritt b) höchstens 0,38 bar, bevorzugt höchstens 0,36 bar, bevorzugt höchstens 0,34 bar, bevorzugt höchstens 0,32 bar, bevorzugt höchstens 0,3 bar, bevorzugt höchstens 0,28 bar, bevorzugt höchstens 0,26 bar, bevorzugt höchstens 0,24 bar, bevorzugt höchstens 0,22 bar.

In einer besonders bevorzugten Ausführungsform der vorliegenden Erfindung beträgt die Dauer des Verfahrensschrittes b) 5 bis 30 min, insbesondere 7 bis 28 min, insbesondere 8 bis 27 min, insbesondere 5 bis 25 min, insbesondere 9 bis 25 min.

In einer bevorzugten Ausführungsform der vorliegenden Erfindung erfolgt die Durchmischung in Schritt b) kontinuierlich.

In einer besonders bevorzugten Ausführungsform der vorliegenden Erfindung ist das Abkühlen ein passives Abkühlen. Gemäß dieser Ausführungsform kann vorgesehen sein, die in Schritt b) bei einer bestimmten Temperatur vorliegende wässrige Medium dadurch abkühlen zu lassen, dass keine Hitze zugeführt wird, beispielsweise durch Stehenlassen bei Raumtemperatur oder durch Lagerung oder Transport auf einem Kühltisch oder Kühlband. In einer anderen Ausführungsform der vorliegenden Erfindung kann das Abkühlen auch ein aktives Abkühlen unter Einsatz von abkühlenden Mitteln sein.

In einer weiteren bevorzugten Ausführungsform der vorliegenden Erfindung erfolgt das Abkühlen des wässrigen Mediums in Schritt c) auf eine Temperatur von 72 bis 88 °C, bevorzugt 74 bis 86 °C, bevorzugt 76 bis 84 °C, bevorzugt 78 bis 82 °C, bevorzugt 80 °C.

In einer bevorzugten Ausführungsform der vorliegenden Erfindung weist die in Schritt c) erhaltene plastische Masse einen Wassergehalt von 1 bis 4 %, bevorzugt 1,5 bis 2,5 %, besonders bevorzugt 1,8 bis 2,5 % auf.

In einer weiteren bevorzugten Ausführungsform der vorliegenden Erfindung weist die in Schritt c) erhaltene plastische Masse einen Wassergehalt von höchstens 4 %, bevorzugt höchstens 3,9 %, bevorzugt höchstens 3,8 %, bevorzugt höchstens 3,7 %, bevorzugt höchstens 3,6 %, bevorzugt höchstens 3,5 %, bevorzugt höchstens 3,4 %, bevorzugt höchstens 3,3 %, bevorzugt höchstens 3,2 %, bevorzugt höchstens 3,1 %, bevorzugt höchstens 3,0 %, bevorzugt höchstens 2,9 %, bevorzugt höchstens 2,8 %, bevorzugt höchstens 2,7 %, bevorzugt höchstens 2,6 %, bevorzugt höchstens 2,5%, bevorzugt höchstens 2,4 %, bevorzugt höchstens 2,3 %, bevorzugt höchstens 2,2 %, bevorzugt höchstens 2,1 %, bevorzugt höchstens 2,0 %, bevorzugt höchstens 1,9 %, bevorzugt höchstens 1,8 %, bevorzugt höchstens 1,7 %, bevorzugt höchstens 1,6 %, bevorzugt höchstens 1,5 %, auf.

In einer besonders bevorzugten Ausführungsform betrifft die vorliegende Erfindung ein Verfahren zur Herstellung einer Isomaltulose-haltigen Hartkaramelle, umfassend die Schritte:
a) Bereitstellen eines wässrigen Mediums, enthaltend Isomaltulose in einer Menge von 50 bis 100 Gew.-% (bezogen auf Gesamttrockensubstanz),
b) Anlegen eines reduzierten Drucks von 0,1 bis 0,4 bar unter kontinuierlicher Durchmischung an das wässrige Medium bei einer Temperatur von höchstens 125 °C, insbesondere höchstens 120 °C, für einen Zeitraum von 5 bis 30 Minuten,
c) Abkühlen des wässrigen Mediums auf eine Temperatur von 70 bis 90 °C bei atmosphärischem Druck zum Erhalt einer plastischen Masse und
d) Formen der in Schritt c) erhaltenen plastischen Masse und Erhalten einer Isomaltulose-haltigen Hartkaramelle, die sich durch eine mikrokristalline Grenzschicht einer Dicke von 0,1 bis 0,3 mm auszeichnet.

Die vorliegende Erfindung betrifft ferner eine Hartkaramelle herstellbar, insbesondere hergestellt, nach dem erfindungsgemäßen Verfahren zur Herstellung einer Isomaltulose-haltigen Hartkaramelle.

In einer bevorzugten Ausführungsform der vorliegenden Erfindung weist die erfindungsgemäße Hartkaramelle, insbesondere die nach dem erfindungsgemäßen Verfahren herstellbare, insbesondere hergestellte, Hartkaramelle eine Wiederfindung der ursprünglich eingesetzten Isomaltulose von mindestens 90 %, bevorzugt mindestens 91 %, bevorzugt mindestens 92%, bevorzugt mindestens 93 %, bevorzugt mindestens 94 %, bevorzugt mindestens 95 %, bevorzugt mindestens 96 %, bevorzugt mindestens 97 %, bevorzugt mindestens 98 %, bevorzugt mindestens 99 %, bevorzugt 100 %, auf.

Im Zusammenhang mit der vorliegenden Erfindung sind Gew.-% Angaben immer bezogen auf die Gesamttrockensubstanz der Hartkaramelle, falls nichts anderes angegeben ist.

Der Begriff "Hartkaramelle" bezeichnet im Zusammenhang mit der vorliegenden Erfindung ein im Wesentlichen amorphes, glasartiges Produkt.

Im Zusammenhang mit der vorliegenden Erfindung wird unter dem Kern der Hartkaramelle der Bereich der Hartkaramelle verstanden, der nicht durch die dünne geschlossene mikrokristalline Oberflächenschicht gebildet wird. Die erfindungsgemäße Hartkaramelle umfasst daher im Wesentlichen zwei Bereiche, nämlich eine dünne geschlossene mikrokristalline Oberflächenschicht aus Isomaltulose-Kristallen und einen nicht-kristallisierten Kern enthaltend Isomaltulose.

Im Zusammenhang mit der vorliegenden Erfindung wird unter einer "plastischen Masse" eine verformbare Masse bezeichnet.

Der Begriff "Abkühlen" bezeichnet im Zusammenhang mit der vorliegenden Erfindung eine Verringerung der Temperatur. Dabei umfasst der Begriff sowohl ein aktives Abkühlen, insbesondere durch den aktiven Entzug von Wärmeenergie, als auch ein passives Abkühlen, insbesondere ein "abkühlen lassen".

Im Zusammenhang mit der vorliegenden Erfindung wird unter dem Begriff "Disaccharid" ein Kohlenhydrat verstanden, das aus zwei Monosacchariden aufgebaut ist, wobei die beiden Monosaccharide über eine glykosidische Bindung miteinander verbunden sind.

Unter einem "Oligosaccharid" wird erfindungsgemäß ein Kohlenhydrat verstanden, das aus drei bis zehn Monosacchariden aufgebaut ist, wobei die einzelnen Monosaccharide über glykosidische Bindungen miteinander verbunden sind.

Der Begriff "Polysaccharid" bezeichnet erfindungsgemäß ein Kohlenhydrat, das aus mehr als zehn Monosacchariden aufgebaut ist, wobei die einzelnen Monosaccharide über glykosidische Bindungen miteinander verbunden sind.

Unter "Wiederfindung" wird im Zusammenhang mit der vorliegenden Erfindung der prozentuale Anteil eines Stoffes, insbesondere der prozentuale Anteil der ursprünglich eingesetzten Kohlenhydrate, bevorzugt der prozentuale Anteil der ursprünglich eingesetzten Isomaltulose, verstanden, der nach Durchführung des erfindungsgemäßen Verfahrens, insbesondere nach Herstellung der erfindungsgemäßen Hartkaramelle, chemisch unverändert in der Hartkaramelle vorliegt. Demnach bedeutet eine hohe "Wiederfindung", dass während des Herstellungsverfahrens keine oder nur eine geringe chemische Veränderung der betreffenden Stoffe, insbesondere die ursprünglich eingesetzten Kohlenhydrate, bevorzugt die ursprünglich eingesetzten Isomaltulose, stattgefunden hat, insbesondere dass nur ein geringer Anteil der ursprünglich in dem Verfahren eingesetzten Stoffe chemisch verändert wurde und der überwiegende Anteil der Stoffe chemisch unverändert in der Hartkaramelle vorliegt.

Im Zusammenhang mit der vorliegenden Erfindung liegt bevorzugt eine erfindungsgemäß hohe Lagerstabilität dann vor, wenn bei einem Lagerungstest über drei Tage bei 30 °C und 70 % relativer Luftfeuchte (rF) eine Gewichtszunahme von höchstens 5 Gew.-%, insbesondere höchstens 4 Gew.-%, insbesondere höchstens 3,5 Gew.-%, insbesondere höchstens 2 Gew.-%, insbesondere höchstens 1,5 Gew.-%, insbesondere höchstens 1 Gew.-% (jeweils bezogen auf Gesamtmasse) auftritt.

Im Zusammenhang mit der vorliegenden Erfindung wird unter den Begriffen "umfassend" und "aufweisend" verstanden, dass zusätzlich zu den von diesen Begriffen explizit erfassten Elementen noch weitere, nicht explizit genannte Elemente hinzutreten können. Im Zusammenhang mit der vorliegenden Erfindung wird unter diesen Begriffen auch verstanden, dass allein die explizit genannten Elemente erfasst werden und keine weiteren Elemente vorliegen. In dieser besonderen Ausführungsform ist die Bedeutung der Begriffe "umfassend" und "aufweisend" gleichbedeutend mit dem Begriff "bestehend aus". Darüber hinaus erfassen die Begriffe "umfassend" und "aufweisend" auch Zusammensetzungen, die neben den explizit genannten Elementen auch weitere nicht genannte Elemente enthalten, die jedoch von funktionell und qualitativ untergeordneter Natur sind. In dieser Ausführungsform sind die Begriffe "umfassend" und "aufweisend" gleichbedeutend mit dem Begriff "im Wesentlichen bestehend aus".

Unter dem Begriff "und/oder" wird in Zusammenhang mit der vorliegenden Erfindung verstanden, dass alle Mitglieder einer Gruppe, welche durch den Begriff "und/oder" verbunden sind, sowohl alternativ zueinander als auch jeweils untereinander kumulativ in einer beliebigen Kombination offenbart sind. Dies bedeutet für den Ausdruck "A, B und/oder C", dass folgender Offenbarungsgehalt darunter zu verstehen ist: a) A oder B oder C oder b) (A und B) oder c) (A und C) oder d) (B und C) oder e) (A und B und C).

Sofern im Zusammenhang mit der vorliegenden Erfindung für eine Zahl die erste und zweite Nachkommastelle oder die zweite Nachkommastelle nicht angegeben sind/ist, sind/ist diese als Null zu setzen.

Sofern im Zusammenhang mit der vorliegenden Erfindung quantitative Angaben, insbesondere Prozentangaben, von Komponenten eines Produktes oder einer Zusammensetzung angegeben sind, addieren diese, sofern nicht explizit anders angegeben oder fachmännisch ersichtlich, zusammen mit den anderen explizit angegebenen oder fachmännisch ersichtlichen weiteren Komponenten der Zusammensetzung oder des Produktes auf 100 % der Zusammensetzung und/oder des Produktes auf.

Sofern im Zusammenhang mit der vorliegenden Erfindung ein "Vorhandensein", ein "Enthalten" oder ein "Aufweisen" einer Komponente in einer Menge von 0 Gew.-% ausdrücklich erwähnt oder impliziert wird, bedeutet dies, dass die jeweilige Komponente nicht in messbarer Menge vorhanden, insbesondere nicht vorhanden ist.

Weitere bevorzugte Ausführungsformen ergeben sich aus den Unteransprüchen.

Die Erfindung wird nachstehend ohne Beschränkung des allgemeinen Erfindungsgedankens anhand beispielhafter Figuren und Ausführungsbeispiele beschrieben.

### Beispiel 1

2 kg Isomaltulose sowie 0,8 kg vollentsalztes Wasser wurden in einem Satzkocher eingewogen (entspricht 71 Gew.-% Trockensubstanzgehalt) (Verfahrensschritt a)). Dieses wässrige Medium enthaltend Isomaltulose wurde bei atmosphärischem Druck auf 125 °C aufgeheizt (Verfahrensschritt a1)). Anschließend wurde ein Druck von 0,2 bar an die so erhaltene wässrige Lösung enthaltend Isomaltulose angelegt, wobei durch Anlegen dieses Druckes die Lösung auf 100 °C abgekühlt wurde. Diese Lösung wurde unter kontinuierlicher Durchmischung bei einem Druck von 0,2 bar auf 105 °C erhitzt (Verfahrensschritt b)).

Nach dem Einkochen wurde der angelegte Unterdruck aufgehoben, also atmosphärischer Druck eingestellt, der Satzkocher entleert und die gekochte plastische Masse auf einem Stahltisch auf 70 bis 80 °C abgekühlt (Verfahrensschritt c)).

Die so erhaltene Masse wurde mittels Walzen zu Hartkaramellen geprägt (Verfahrensschritt d)).

### Beispiel 2

Die in der nachstehenden Tabelle 1 angegebenen Hartkaramellen wurden gemäß des in Beispiel 1 angegebenen Verfahrens mit der in der nachstehenden Tabelle 2 angegebenen Temperatur, Druck und Dauer des Verfahrensschritts b) hergestellt. Im Fall einer Mischung aus Isomaltulose und einem Sirup ist bei der Angabe des Verhältnisses zwischen beiden diese auf die Trockensubstanz bezogen, das heißt auf den Trockensubstanzgehalt nach Mischung der Isomaltulose, des Sirups und ggf. Wasser zu einem wässrigen Medium.

Die Versuche 1, 2, 3 und 18 sind nicht erfindungsgemäße Referenzbeispiele, in denen nicht erfindungsgemäße Zusammensetzungen wie in den Versuchen 1 bis 3 beziehungsweise nicht erfindungsgemäße Prozessparameter, wie in Beispiel 18 (erhöhte Temperatur, kein reduzierter Druck), eingesetzt wurden.

**Tabelle 1 - Rezepturen**

| **Versuch** | **Bezeichnung** | **Glucosesirup** | **Isomaltulose** | **Saccharose** | **Zugegebenes Wasser** |
|---|---|---|---|---|---|
| **1** | Referenz Glucose/ Saccharose | 2367 | | 2367 | 500 |
| **2** | 30% Isomaltulose | 2496 | 1200 | 800 | 400 |
| | 20 % Sacch. | | | | |
| | 50 % Sirup (EHM) | | | | |
| **3** | 30% Isomaltulose | 1600 | 1200 | 1600 | 800 |
| | 35 % Sacch. | | | | |
| | 35 % Sirup (EHM) | | | | |
| **4** | 100 % Isomaltulose | | 5000 | | 2000 |
| **5** | 100 % Isomaltulose | | 5000 | | 2000 |
| **6** | 90% Isomaltulose | 500 | 4500 | | 1800 |
| | 10% Glucosesirup | | | | |
| **7** | 80% Isomaltulose | 1000 | 4000 | | 1600 |
| | 20% Glucosesirup | | | | |
| **8** | 70% Isomaltulose | 1500 | 3500 | | 1400 |
| | 30% Glucosesirup | | | | |
| **9** | 60% Isomaltulose | 2000 | 3000 | | 1200 |
| | 40% Glucosesirup | | | | |
| **10** | 100 % Isomaltulose | | 5000 | | 2000 |
| **11** | Isomaltu. : Sacch: DE40 - 60:20:20 | 1000 | 3000 | 1000 | 1400 |
| **12** | Isomaltu. : Sacch: DE40 - 50:30:20 | 1000 | 2500 | 1500 | 1400 |
| **13** | 100 % Isomaltulose | | 2000 | | 800 |
| **14** | 90 % Isomaltulose | | 1800 | 200 | 800 |
| | 10 % Sacch. | | | | |
| **15** | 80 % Isomaltulose | | 1600 | 400 | 800 |
| | 20 % Sacch. | | | | |
| **16** | 70 % Isomaltulose | | 1400 | 600 | 800 |
| | 30 % Sacch. | | | | |
| **17** | 100 % Isomaltulose | | 2000 | | 800 |
| | 125°C | | | | |
| **18** | 100 % Isomaltulose | | 5000 | | 2000 |
| | 145 °C | | | | |

| | | | | | |
|---|---|---|---|---|---|
| Legende: Isomaltu. steht für Isomaltulose, Sacch. steht für Saccharose, DE40 bezeichnet einen Glucosesirup mit Dextrose Equivalent 40, EHM ist ein Extra-High-Maltosesirup, Versuche 1 bis 3 und 18 sind nicht erfindungsgemäße Referenzversuche, Mengenangaben der Komponenten in g. | | | | | |

**Tabelle 2 - Verfahrensbedingungen und Ergebnisse I (unmittelbar nach Herstellung)**

| **Versuch** | **Bezeichnung** | **Max. T [°C]** | **Druck [bar]** | **Dauer [min]** | **Wassergehalt** | **Mikrokristalline Oberflächenschicht [µm]** | **Wiederfindung Isomaltulose** | **Bemerkung** |
|---|---|---|---|---|---|---|---|---|
| **1** | Referenz Saccharose/ Glucose | 140 | 0,2 | 25 | 1,9% | | | Normale Konsistenz, leicht gelblich |
| **2** | 30% Isomaltulose | 119 | 0,3 | 17 | 2,7% | | 100 % | Viele Luftblasen, aber gute Farbe und Viskosität. |
| | 20 % Sacch. | | | | | | | |
| | 50 % Sirup (EHM) | | | | | | | |
| **3** | 30% Isomaltulose | 120 | 0,2 | 15 | 2,2% | | 100 % | Gelblich, zähe Masse, trotzdem gut prägbar mit guter Oberfläche |
| | 35 % Sacch. | | | | | | | |
| | 35 % Sirup (EHM) | | | | | | | |
| **4** | 100 % Isomaltulose | 120 | 0,25 | 16 | 2,8% | | 100 % | Dünnflüssig, gut prägbar, wenig Blasen |
| **5** | 100 % Isomaltulose | 120 | 0,2 | 18 | 2,0% | | 100 % | Gut prägbar, glasklar, ähnlich wie Versuch 4 |
| **6** | 90% Isomaltulose | 120 | 0,19 | 19 | 2,2% | 164 | 98 % | Gut fließfähig, ziemlich viele Blasen, gut prägbar |
| | 10% Glucosesirup | | | | | | | |
| **7** | 80% Isomaltulose | 123 | 0,2 | 20 | 1,8% | | 97 % | Gut prägbar, normale |
| | 20% Glucosesirup | | | | | | | Viskosität, wenig Blasen. |
| **8** | 70 % Isomaltulose | 121 | 0,18 | 19 | 1,9% | | 95 % | Gut prägbar, normale |
| | 30 % Glucosesirup | | | | | | | Viskosität, wenig Blasen. |
| **9** | 60 % Isomaltulose | 120 | 0,38 | 17 | 2,0% | 212 | 96 % | Schaumbildung, größere Blasen, sehr viskos., prägbar |
| | 40 % Glucosesirup | | | | | | | |
| **10** | 100 % Isomaltulose | 120 | 0,2 | 14 | 2,0% | 130 | 100 % | Glasklar, normale Viskosität, gut prägbar |
| **11** | Isomaltu. : Sacch: DE40 - 60:20:20 | 121 | 0,18 | 17 | 2,0% | | 100 % | Gelblich, gut prägbar |
| **12** | Isomaltu. : Sacch: DE40 - 50:30:20 | 120 | 0,18 | 19 | 2,2% | | 100 % | Stark gelblich, gut prägbar |
| **13** | 100 % Isomaltulose | 119 | 0,19 | 14 | 2,6% | 155 | 100 % | Sehr dünnflüssig, prägbar |
| **14** | 90% Isomaltulose | 120 | 0,19 | 14 | 3,0% | | 100 % | Leicht gelblich, gut prägbar |
| | 10 % Sacch. | | | | | | | |
| **15** | 80 % Isomaltulose | 120 | 0,2 | 18 | 2,9% | | 100 % | Gelblich, dünnflüssig, prägbar |
| | 20 % Sacch. | | | | | | | |
| **16** | 70 % Isomaltulose | 120 | 0,2 | 16 | 3,1% | | 100 % | Gelblich, gut prägbar |
| | 30 % Sacch. | | | | | | | |
| **17** | 100 % Isomaltulose 125°C | 125 | 0,2 | 18 | 1,9% | | 89 % | Leicht gelblich, gut prägbar |
| **18** | 100 % Isomaltulose 145 °C | 145 | 1 | 14 | 2,3 | | 92,5 % | Stark gelblich, gut prägbar |

**Tabelle 3 - Ergebnisse II**

| | | Stabilität nach 3 Tagen bei 30 °C/70 % rF | |
|---|---|---|---|
| **Versuch** | **Bezeichnung** | % Gewichtszunahme | Beurteilung |
| **1** | Referenz Saccharose/ Glucose | 5,92 | glänzend bis matt, fortgeschrittenes Zerfließen |
| **2** | 30 % Isomaltulose | 6,03 | matt, fortgeschrittenes Zerfließen |
| | 20 % Sacch. 50 % Sirup (EHM) | | |
| **3** | 30% Isomaltulose | 6,39 | matt, beginnendes Zerfließen |
| | 35 % Sacch. 35 % Sirup (EHM) | | |
| **4** | 100 % Isomaltulose | 0,15 | trocken, fortgeschrittene Rekristallisation |
| **5** | 100 % Isomaltulose - | 0,14 | trocken, fortgeschrittene Rekristallisation |
| **6** | 90 % Isomaltulose | 0,91 | matt, trocken, beginnende Rekristallisation |
| | 10 % Glucosesirup | | |
| **7** | 80 % Isomaltulose | 1,61 | glänzend bis matt, klebrig, beginnende Rekristallisation |
| | 20 % Glucosesirup | | |
| **8** | 70 % Isomaltulose | 2,38 | glänzend, klebrig, beginnende Rekristallisation |
| | 30 % Glucosesirup | | |
| **9** | 60 % Isomaltulose | 3,21 | glänzend, klebrig, beginnende Rekristallisation |
| | 40 % Glucosesirup | | |
| **10** | 100 % Isomaltulose | 0,37 | matt, trocken, beginnende Rekristallisation |
| **11** | Isomaltu. : Sacch: DE40 - 60:20:20 | 3,51 | glänzend, klebrig, beginnende Rekristallisation |
| **12** | Isomaltu. : Sacch: DE40 - 50:30:20 | 3,36 | glänzend bis matt, klebrig, beginnende Rekristallisation |
| **13** | 100 % Isomaltulose | 0,28 | matt, trocken, beginnende Rekristallisation |
| **14** | 90% Isomaltulose | 0,50 | matt, trocken, beginnende Rekristallisation |
| | 10% Sacch. | | |
| **15** | 80 % Isomaltulose | 0,67 | matt, trocken, beginnende Rekristallisation |
| | 20 % Sacch. | | |
| **16** | 70 % Isomaltulose | 0,80 | matt, trocken, beginnende Rekristallisation |
| | 30 % Sacch. | | |
| **17** | 100 % Isomaltulose 125°C | 0,88 | glänzend bis matt, klebrig, beginnende Rekristallisation |

Für die Hartkaramelle nach den Versuchen 6, 9, 10 und 13 wurde die Dicke der mikrokristallinen Oberflächenschicht bestimmt. Ferner wurde die Wiederfindung von Isomaltulose der Versuche 2 bis 17 mittels HPLC bestimmt, wobei sich zeigte, dass bei einer erhöhten Temperatur (Versuch 17) während des Verfahrens sowie bei einem erhöhten Anteil von Glucosesirup in der Hartkaramelle (Versuche 6 bis 9) die Wiederfindung geringer ist.

Bei einem anschließenden Stabilitätstest (Tabelle 3) mit den verschiedenen gemäß Tabelle 1 hergestellten Hartkaramellen zeigte sich, dass die Hartkaramellen der Referenzversuche 1 bis 3 eine deutliche Gewichtszunahme nach Durchführung des Versuches aufwiesen, wohingegen die Hartkaramellen der erfindungsgemäßen Versuche 4 bis 17 eine geringere Gewichtszunahme aufwiesen und nicht zerflossen sind. Besonders vorteilhafterweise blieben die erfindungsgemäßen Hartkaramellen der Versuche 4, 5, 6, 10, 11 und 13 bis 16 trocken, wobei sich diese durch einen fehlenden Glucoseanteil oder ein Isomaltulose:Glucosesirup-Verhältnis von 90:10 auszeichnen.

Es zeigt sich auch, dass eine Hartkaramelle, die bei höherer Temperatur, nämlich 145 °C, bei Atmosphärendruck hergestellt wurde, eine starke unerwünschte Dunkelfärbung (Bräunung) im Vergleich zu einer erfindungsgemäßen Hartkaramelle gleicher Zusammensetzung, aber anderer Herstellweise (vergleiche zum Beispiel Versuch 10) aufweist.

Für die Hartkaramelle gemäß Versuch 10 konnte nach 25 Monaten Lagerzeit bei 25 °C und 45 % rF eine Schichtdicke von 146 µm und ein Wassergehalt von 2,3 % festgestellt werden. Die Farbe in Lösung betrug 13,5 IE. Diese erfindungsgemäßen Hartkaramellen zeichnen sich durch eine sehr hohe Lager- und Farbstabilität aus.

## Patentansprüche

1. Hartkaramelle, enthaltend Isomaltulose in einer Menge von 50 bis 100 Gew.-% bezogen auf die Gesamttrockensubstanz der Hartkaramelle, wobei die Hartkaramelle einen Kern und eine geschlossene mikrokristalline Oberflächenschicht mit einer Dicke von höchstens 1 mm aufweist und wobei die Hartkaramelle mindestens einen Hilfs-oder Zusatzstoff umfassen kann.

2. Hartkaramelle nach Anspruch 1, wobei die Isomaltulose im Kern der Hartkaramelle nicht vollständig kristallisiert vorliegt.

3. Hartkaramelle nach Anspruch 1 oder 2, wobei die Hartkaramelle Saccharose, Glucose oder Saccharose und Glucose in einer Menge von höchstens 40 Gew.-% aufweist bezogen auf die Gesamttrockensubstanz der Hartkaramelle.

4. Hartkaramelle nach einem der vorherigen Ansprüche, wobei die Hartkaramelle einen transparenten Kern aufweist.

5. Hartkaramelle nach einem der vorherigen Ansprüche, wobei die Hartkaramelle keine Bräunung aufweist.

6. Hartkaramelle nach einem der vorherigen Ansprüche, wobei die Hartkaramelle eine hohe Lagerstabilität, insbesondere eine hohe Formstabilität, aufweist.

7. Hartkaramelle nach einem der vorherigen Ansprüche, hergestellt durch ein Verfahren gemäß einem der Ansprüche 8 bis 11.

8. Verfahren zur Herstellung einer Isomaltulose-haltigen Hartkaramelle, umfassend die Schritte:
a) Bereitstellung eines wässrigen Mediums, enthaltend Isomaltulose in einer Menge von 50 bis 100 Gew.-% bezogen auf die Gesamttrockensubstantz
b) Anlegen eines reduzierten Drucks von höchstens 0,4 bar unter Durchmischung bei einer Temperatur von höchstens 130 °C, insbesondere höchstens 125 °C,
c) Abkühlen des wässrigen Mediums auf eine Temperatur von 70 bis 90 °C bei atmosphärischem Druck zum Erhalt einer plastischen Masse und
d) Formen der in Schritt c) erhaltenen plastischen Masse und Erhalten einer Isomaltulose-haltigen Hartkaramelle aufweisend eine geschlossene mikrokristalline Oberflächenschicht mit einer Dicke von höchstens 1 mm und wobei die Isomaltulose-haltige Hartkaramelle mindestens einen Hilfs- oder Zusatzstoff umfassen kann.

9. Verfahren nach Anspruch 8, wobei das in Schritt a) bereitgestellte wässrige Medium vor Schritt b) in einem Verfahrensschritt a1) auf eine Temperatur von 80 bis 125 °C, bevorzugt 85 bis 100 °C, erhitzt wird.

10. Verfahren nach Anspruch 8 oder 9, wobei die Temperatur in Schritt b) 110 bis 130 °C, insbesondere 120 bis 125 °C, beträgt.

11. Verfahren nach einem der Ansprüche 8 bis 10, wobei die Durchmischung in Schritt b) kontinuierlich erfolgt.

12. Verfahren nach einem der Ansprüche 8 bis 11, wobei die in Schritt c) erhaltene plastische Masse ein Wassergehalt von 1 bis 4%, bevorzugt 1,5 bis 2,5%, besonders bevorzugt 1,8 bis 2,5%, aufweist.

13. Verfahren nach einem der Ansprüche 8 bis 12, wobei das wässrige Medium in Schritt
a) Saccharose in einer Menge von höchstens 40 Gew.-% aufweist bezogen auf die Gesamttrockensubstanz.

## Claims

1. A hard caramel containing isomaltulose in an amount of 50 to 100 wt.%, based on the total dry substance of the hard caramel, wherein the hard caramel has a core and a closed microcrystalline surface layer with a thickness of at most 1 mm and wherein the hard caramel may comprise at least one excipient or additive.

2. The hard caramel of claim 1, wherein the isomaltulose in the core of the hard caramel is not completely crystallised.

3. The hard caramel of claim 1 or 2, wherein the hard caramel has sucrose, glucose or sucrose and glucose in an amount of at most 40 wt.%, based on the total dry substance of the hard caramel.

4. The hard caramel of one of the preceding claims, wherein the hard caramel has a transparent core.

5. The hard caramel of one of the preceding claims, wherein the hard caramel has no browning.

6. The hard caramel of one of the preceding claims, wherein the hard caramel has a high storage stability, in particular a high shape stability.

7. The hard caramel of one of the preceding claims, produced by a method according to one of claims 8 to 11.

8. A method for producing an isomaltulose-containing hard caramel comprising the steps of:
a) providing an aqueous medium containing isomaltulose in an amount of 50 to 100 wt.%, based on the total dry substance,
b) applying a reduced pressure of at most 0.4 bar with mixing at a temperature of at most 130°C, in particular at most 125°C,
c) cooling the aqueous medium to a temperature of 70 to 90°C at atmospheric pressure to obtain a plastic mass, and
d) moulding the plastic mass obtained in step c) and obtaining an isomaltulose-containing hard caramel having a closed microcrystalline surface layer with a thickness of at most 1 mm and wherein the isomaltulose-containing hard caramel may comprise at least one excipient or additive.

9. The method of claim 8, wherein the aqueous medium provided in step a) is heated to a temperature of 80 to 125 °C, preferably 85 to 100 °C, before step b) in a method step a1).

10. The method of claim 8 or 9, wherein the temperature in step b) is 110 to 130 °C, in particular 120 to 125 °C.

11. The method of one of claims 8 to 10, wherein the mixing in step b) is continuous.

12. The method of one of claims 8 to 11, wherein the plastic mass obtained in step c) has a water content of 1 to 4%, preferably 1.5 to 2.5%, particularly preferably 1.8 to 2.5%.

13. The method of one of claims 8 to 12, wherein the aqueous medium in step a) has sucrose in an amount of at most 40 wt.%, based on the total dry substance.

## Revendications

1. Un caramel dur contenant de l'isomaltulose dans une quantité de 50 à 100 % en poids, sur la base de la substance sèche totale du caramel dur, dans lequel le caramel dur a un noyau et une couche de surface microcristalline fermée d'une épaisseur d'au plus 1 mm et dans lequel le caramel dur peut comprendre au moins un excipient ou un additif.

2. Le caramel dur de la revendication 1, dans lequel l'isomaltulose du noyau du caramel dur n'est pas complètement cristallisée.

3. Le caramel dur de la revendication 1 ou 2, dans lequel le caramel dur a du saccharose, du glucose ou du saccharose et du glucose dans une quantité d'au plus 40 % en poids, sur la base de la substance sèche totale du caramel dur.

4. Le caramel dur de l'une des revendications précédentes, dans lequel le caramel dur a un noyau transparent.

5. Le caramel dur de l'une des revendications précédentes, dans lequel le caramel dur n'a pas de brunissement.

6. Le caramel dur de l'une des revendications précédentes, dans lequel le caramel dur a une grande stabilité de stockage, en particulier une grande stabilité de forme.

7. Le caramel dur de l'une des revendications précédentes, fabriqué par un procédé selon l'une des revendications 8 à 11.

8. Un procédé de fabrication d'un caramel dur contenant de l'isomaltulose, comprenant les étapes suivantes :
a) fournir un milieu aqueux contenant de l'isomaltulose en une quantité de 50 à 100 % en poids, sur la base de la substance sèche totale,
b) appliquer une pression réduite d'au plus 0,4 bar avec mélange à une température d'au plus 130°C, en particulier d'au plus 125°C,
c) refroidir le milieu aqueux à une température de 70 à 90°C à la pression atmosphérique pour obtenir une masse plastique, et
d) moulage de la masse plastique obtenue à l'étape c) et obtenir un caramel dur contenant de l'isomaltulose ayant une couche de surface microcristalline fermée d'une épaisseur d'au plus 1 mm et dans lequel le caramel dur contenant de l'isomaltulose peut comprendre au moins un excipient ou un additif.

9. Le procédé de la revendication 8, dans lequel le milieu aqueux fourni à l'étape a) est chauffé à une température de 80 à 125 °C, préférablement de 85 à 100 °C, avant l'étape b) dans une étape a1) du procédé.

10. Le procédé de la revendication 8 ou 9, dans lequel la température de l'étape b) est de 110 à 130 °C, en particulier de 120 à 125 °C.

11. Le procédé de l'une des revendications 8 à 10, dans lequel le mélange à l'étape b) est continu.

12. Le procédé de l'une des revendications 8 à 11, dans lequel la masse plastique obtenue à l'étape c) a une teneur en eau de 1 à 4 %, préférablement de 1,5 à 2,5 %, particulièrement préférablement de 1,8 à 2,5 %.

13. Le procédé de l'une des revendications 8 à 12, dans lequel le milieu aqueux de l'étape a) a du saccharose en une quantité d'au plus 40 % en poids, sur la base de la substance sèche totale.
